# EUROPEAN PATENT APPLICATION

(11) **EP 1 688 704 A1**
(43) Date of publication of application: **09.08.2006**
(21) Application number: 06001473.5
(22) Date of filing: 24.01.2006
(51) Int. Cl.: G01B 11/06

(54) **Thin film inspection apparatus and thin film inspection method**

(30) Priority: 04.02.2005 JP 2005029441
(71) Applicant: OMRON CORPORATION, Kyoto-shi, Kyoto 600-8530 (JP)
(72) Inventor: Tsuchimichi, Kazumi c/o Omron Corporation, Shimogyo-ku Kyoto-shi Kyoto 600-8530 (JP); Takakura, Takeshi c/o Omron Corporation, Shimogyo-ku Kyoto-shi Kyoto 600-8530 (JP)
(74) Representative: Kilian, Helmut

(57) **Abstract**

The measurement light radiated from a radiator 2 enters an object of inspection through an integrating sphere 22. The measurement light is reflected on a base 52 of the object or a thin film 54. Further, the reflected light enters the integrating sphere 22 and is equalized in the integrating sphere 22. After that, the equalized reflected light is led to a light splitter 12 through an optical fiber 10. The light splitter 12 splits the reflected light in the order of wavelength, and applies an electrical signal corresponding to the intensity spectrum to an arithmetic processor 14. The arithmetic processor 14 determines the state of the thin film 54 formed on the surface of the object based on the electrical signal received from the light splitter 12.

## Description

### BACKGROUND OF THE INVENTION

### 1. Field of the Invention

This invention relates to a thin film inspection apparatus and a thin film inspection method for determining the state of a thin film, or in particular to a thin film inspection apparatus and a thin film inspection method for determining the state of a thin film formed on an uneven surface of an object.

### 2. Description of the Related Art

In the prior art, a filmthickness sensor has been conceived which utilizes the light interference to measure the thickness of a thin film formed on a substrate of glass or a silicon wafer in the field of semiconductor.

In the pamphlet of International Patent Publication No. 01/1070 (Patent Document 1), for example, a film thickness sensor is disclosed in which the thickness of a thin film is measured based on that portion of the light emitted from a light source including a plurality of semiconductor light-emitting elements which is reflected on the thin film as an object to be measured or which is transmitted through the thin film constituting the object.

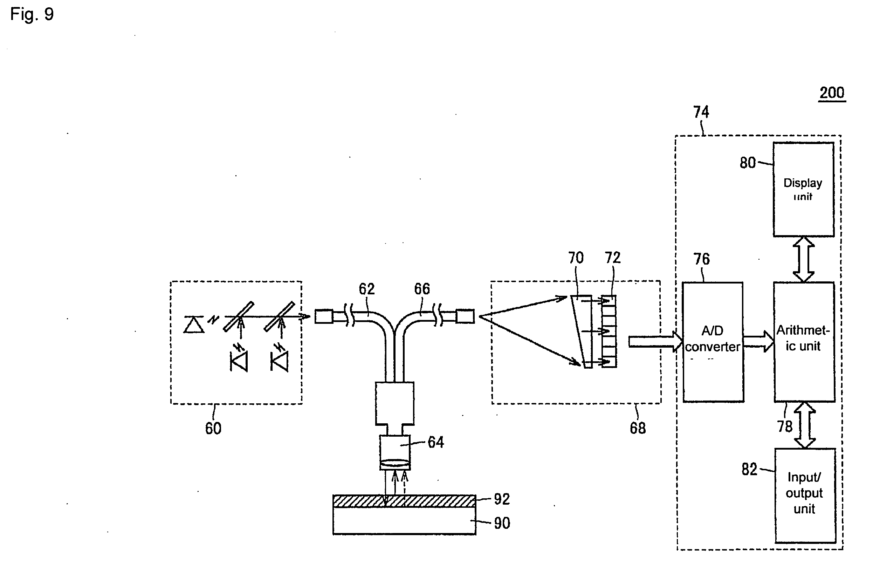

Fig. 9 is a diagram showing a general configuration of a conventional film thickness sensor 200.

Referring to Fig. 9, the film thickness sensor 200 includes a light source 60, optical fibers 62, 66, a light projector/receiver 64, a light splitter 68 and an arithmetic processor 74.

The light source 60 generates white light having a wide wavelength area as measurement light.

The optical fiber 62 connects the light source 60 and the light projector/receiver 64, so that the measurement light generated in the light source 60 is led to the light projector/receiver 64.

In the light proj ector/receiver 64, the measurement light received from the optical fiber 62 is radiated on a thin film 92 providing an object of measurement on the substrate 90. The light projector/receiver 64 receives the light reflected on the substrate 90 or the thin film 92 and applies it to the optical fiber 66.

The optical fiber 66 connects the light projector/receiver 64 and the light splitter 68, and guides the reflected light received from the light projector/receiver 64 to the light splitter 68.

In the light splitter 68, an electrical signal corresponding to the intensity spectrum of the reflected light received from the optical fiber 66 is applied to the arithmetic processor 74. The light splitter 68 includes an optical filter 70 for splitting the received light in the order of wavelength and a photodetector 72 for converting the received light into an electrical signal corresponding to the light intensity.

The arithmetic processor 74, in response to the electrical signal from the light splitter 68, outputs a measurement value of the thickness of the thin film 92. The arithmetic processor 74 includes an A/D (analog-to-digital) converter 76 for converting an analog electrical signal to a digital signal, an arithmetic unit 78 for calculating the thickness of the thin film 92 based on the digital signal produced from the A/D converter 76, a display unit 80 for outputting the result of calculation and an input/output unit 82 for receiving a set value from an external source.

In the thickness sensor 200, the light reflected on a measurement object contains the light reflected on the thin film 92 and the light transmitted through the thin film 92 and reflected on the substrate 90. The difference in light path corresponding to the thickness of the thin film 92 occurs, therefore, between the light reflected from the thin film 92 and the light reflected from the substrate 90. By observing the interference, i.e. the periodical change of the light intensity in the wavelength domain caused by this light path difference, therefore, the thickness of the thin film 92 can be measured.

In recent years, study has been under way to form a thin film on the surface of a plastic container of polyethylene terephthalate resin (hereinafter referred to as the PET bottle) or the like thereby to suppress the intrusion of oxygen from an external source. This thin film which functions to suppress the intrusion from an external source is called "the barrier film". The barrier film is formed of DLC (diamond-like carbon) or SiO₂.

By suppressing oxygen intrusion from an external source, the degeneration of the contents such as drinking water can be suppressed and a satisfactory quality can be maintained for a longer period. As a result, the cost of disposing of a commodity for which the best-before date has expired is also suppressed.

In the future, therefore, the fabrication process of plastic containers is expected to require the step of determining the state of the barrier film formed thereon.

### SUMMARY OF THE INVENTION

In the fabrication process of plastic containers, it is crucial to determine the state of the barrier film in non-destructive way.

The thickness sensor described above may be used as a means for determining the state of the barrier film in non-destructive way.

Generally, however, the plastic containers have a complicated shape to attract the interest of consumers, and therefore, unlike the semiconductor substrate, have no flat surface. In the case where the object of measurement of the film thickness sensor is a plastic container, therefore, the measurement light radiated from one direction is reflected in various directions, and it is difficult for the light projector/receiver to trap the reflected light. Further, the plastic containers have no uniform shape. Even for the same type of plastic containers, therefore, the measurement result is varied depending on the radiation point of the measurement light.

As described above, the state of the barrier film formed on the surface of plastic containers cannot be determined by the conventional film thickness sensor.

This invention has been achieved to solve this problem, and the object thereof is to provide a thin film inspection apparatus and a thin film inspection method in which the state of the thin film formed on the surface of an inspection object of any shape can be determined in non-destructive way.

According to one aspect of the invention, there is provided a thin film inspection apparatus comprising a radiator for radiating the measurement light on an object to be inspected, a hollow integrator with an inner surface formed of a light-reflecting diffusive material to spatially integrate a light, out of the measurement light, reflected from the object and received through an opening, a light splitter for acquiring the spectral characteristic of the reflected light integrated by the integrator, and an arithmetic processor for determining the state of the thin film formed on the surface of the object based on the spectral characteristic acquired by the light splitter.

Preferably, the arithmetic processor stores the spectral characteristic of a reference having the same shape as the obj ect and no thin film formed thereon, and determines the state of the thin film formed on the surface of the object by comparing the spectral characteristic thus stored.

Preferably, the integrator includes an opening for passing the measurement light radiated from the radiator, and the radiator radiates the measurement light from the direction at a predetermined angle to the direction substantially perpendicular to the radiated surface of the object.

Preferably, the integrator includes a means for preventing the light splitter from directly acquiring the reflected light before integration.

According to another aspect of the invention, there is provided a thin film inspection apparatus comprising a radiator for radiating the measurement light on an object of inspection and a reference having the same shape as the object and not formed with a thin film on the surface thereof, a first integrator for spatially integrating the portion of the measurement light reflected from the object, a second integrator for spatially integrating the portion of the measurement light reflected from the reference, a light splitter for acquiring the spectral characteristics of the reflected lights integrated by the first and second integrators, and an arithmetic processor for determining the state of the thin film formed on the surface of the object by comparing the spectral characteristic of the object with the spectral characteristic of the light reflected from the reference, both of which are acquired by the light splitter.

Preferably, the obj ect of inspection is a glossy container formed with a thin film on the surface thereof.

According to still another aspect of the invention, there is provided a thin film inspection method comprising the radiation step for radiating the measurement light on an object of inspection having a translucent, glossy surface formed with a thin film, the integration step for spatially integrating the portion of the measurement light reflected by the interference of the object thin film by covering the hollow space with a diffusionmember for diffusively reflecting the light, the light splitting step for splitting and acquiring the spectral characteristic of the reflected light integrated at the integration step, and the arithmetic processing step for determining the state of the thin film formed on the object surface based on the spectral characteristic acquired at the light splitting step.

Preferably, the obj ect of inspection is a glossy container formed with a thin film on the surface thereof, and the measurement light is radiated on the uneven surface of the object.

According to this invention, the light, out of the measurement light radiated from the radiator, which is reflected in a plurality of directions in accordance with the object of inspection is spatially integrated by the integration means. Regardless of the shape of the object of inspection, therefore, the intensity spectrum of the light reflected on the object of inspection can be acquired. As a result, the state of the thin film formed on the surface of the object of inspection having any shape can be determined in non-destructive way.

### BRIEF DESCRIPTION OF THE DRAWINGS

Fig. 1 shows a general configuration of a thin film inspection apparatus according to a first embodiment of the invention.

Fig. 2 shows the behavior of the measurement light and the reflected light in an integrating sphere.

Fig. 3 shows a general configuration of a thin film inspection apparatus according to a modification of the first embodiment of the invention.

Fig. 4 shows the appearance of an example of the thin film inspection apparatus used for inspecting a PET bottle.

Fig. 5 shows an example of the relative reflectivity characteristic of the PET bottle.

Fig. 6 shows a flowchart of the determination process.

Fig. 7 shows a general configuration of a thin film inspection apparatus according to a second embodiment of the invention.

Fig. 8 shows a flowchart for the process executed in the thin film inspection apparatus.

Fig. 9 shows a general configuration of a conventional film thickness sensor.

### DETAILED DESCRIPTION OF THE INVENTION

Embodiments of the invention are explained in detail below with reference to the drawings. In the drawings, the same or equivalent component parts are designated by the same reference numerals, respectively, and not explained again.

### [First embodiment]

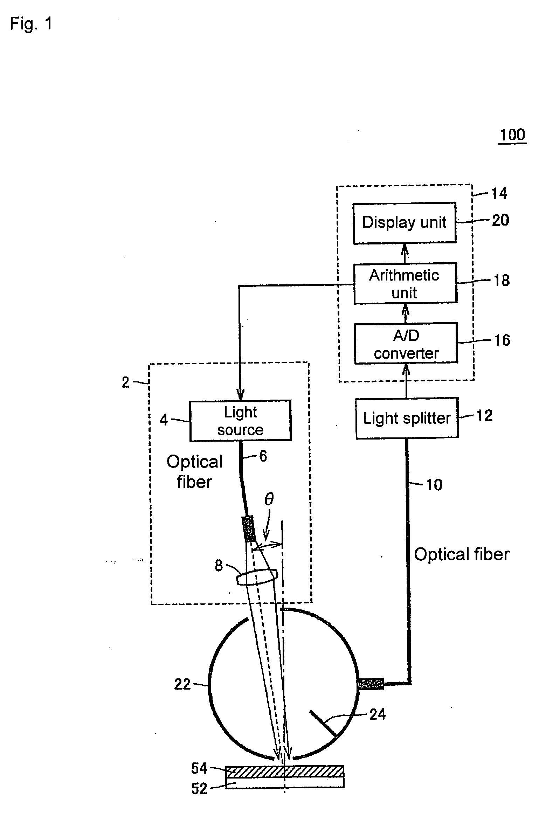

Fig. 1 is a diagram showing a general configuration of a thin film inspection apparatus 100 according to a first embodiment of the invention.

Referring to Fig. 1, the thin film inspection apparatus 100 includes a radiator 2, an integrating sphere 22, an optical fiber 10, a light splitter 12 and an arithmetic processor 14. An object of inspection (hereinafter sometimes referred to simply as the object) includes a base 52 and a thin film 54 formed on the surface of the base 52. The object is shown as a sectional view to facilitate the understanding.

The radiator 2 radiates the measurement light on the obj ect, and includes a light source 4, an optical fiber 6 and a focusing lens 8.

The light source 4 is configured of a xenon lamp or LED (light-emitting diode) to generate the measurement light containing the visible light which is applied to the optical fiber 6.

The optical fiber 6 leads the measurement light generated by the light source 4 to the focusing lens 8.

The focusing lens 8 condenses the measurement light received from the optical fiber 6 and radiates it on the object. In place of the focusing lens 8, a configuration may be used in which the measurement light is converted into the parallel light using a parallel lens and radiated.

The integrating sphere 22 spatially integrates the portion of the radiated measurement light which is reflected from the object. The integrating sphere 22 is a spherical object having the inner surface thereof coated with a dispersing agent such as barium sulfide having a high reflectivity. Specifically, the light incident to the integrating sphere 22 is repeatedly reflected on the inner surface thereof and spatially equalized without regard to the direction of incidence. Further, in order to radiate the measurement light from the radiator 2 directly on the object of inspection without being integrated by the integrating sphere 22, an opening for passing the measurement light is formed at the intersection between the spherical surface of the integrating sphere 22 and the optical axis of the focusing lens 8. Also, the integrating sphere 22 includes a baffle plate 24 for preventing the light reflected on the object from being directly output to the light splitter.

The optical fiber 10 connects the integrating sphere 22 and the light splitter 12 to each other, and extracts and leads the reflected light integrated by the integrating sphere 22 to the light splitter 12.

The light splitter 12 splits the reflected light received from the optical fiber 10 in the order of wavelength. Further, the light thus split is received by the CCD (charge coupled device) or the like, and an electrical signal corresponding to the light intensity for each wavelength, i.e. an intensity spectrum is applied to the arithmetic processor 14.

The arithmeticprocessor 14, basedonthe electrical signal received from the light splitter 12, determines the state of the thin film 54 formed on the surface of the object. The arithmetic processor 14 includes an A/D (analog-to-digital) converter 16, an arithmetic unit 18 and a display unit 20.

The A/D converter 16 converts the analog electric signal received from the light splitter 12 into a digital signal and applies the digital signal to the arithmetic unit 18.

The arithmetic unit 18, based no the digital signal received from the A/D converter 16, determines the state of the thin film formed on the surface of the object. The arithmetic unit 18 applies the determination result to the display unit 20.

The display unit 20 displays the determination result thus received from the arithmetic unit 18.

As described above, the measurement light radiated from the radiator 2 is passed through the integrating sphere 22 and enters the object. Part of the measurement light is reflected on the base 52 or the thin film 54 constituting the object. Further, the reflected light enters the integrating sphere 22 and is equalized in the integrating sphere 22. The reflected light thus equalized is led to the light splitter 12 through the optical fiber 10.

The radiator 2 radiates the measurement light from the direction at a predetermined radiation angle θ with respect to the direction substantially perpendicular to the radiated surface of the object. Specifically, the optical axis of the focusing lens 8 is arranged at an angle of θ with respect to the direction substantially perpendicular to the radiated surface of the object. By providing the radiation angle θ in this way, the reflected light can be prevented from leaking out of the integrating sphere 22 from the opening for passing the measurement light, thereby suppressing the determination error which otherwise might be caused by the loss of the reflected light.

### (Integration means)

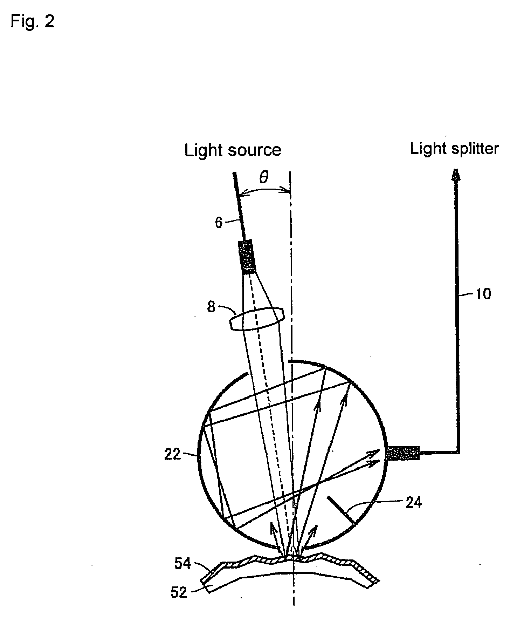

Fig. 2 is a diagram showing the behavior of the measurement light and the reflected light in the integrating sphere 22.

Referring to Fig. 2, the surface of the object has complicated unevennesses. As a result, the measurement light focused by the focusing lens 8 and entering the surface of the object along a predetermined optical axis is not reflected in a single direction.

The integrating sphere 22 is arranged in proximity to the object of inspection, and substantially the entire light regularly reflected on the object enters the integrating sphere 22. The reflected light that has entered the integrating sphere 22 has various directions of propagation. This reflected light, however, is repeatedly reflected on the inner surface of the integrating sphere 22 and gradually equalized. The reflected light thus equalized is output to the light splitter 12 through the optical fiber 10.

The reflected light before being integrated by the integrating sphere 22 has a higher intensity than the reflected light so integrated, and therefore a determination error occurs if the reflected light before integration is output to the light splitter 12. In view of this, a baffle plate 24 is arranged in the integrating sphere 22 so that the reflected light not integrated may not be directly output to the light splitter 12. The surface of the baffle plate 24 is coated with a material having a high reflectivity, and the reflected light that has entered the baffle plate 24 is reflected and integrated by the integrating sphere 22.

As described above, the integrating sphere 22 spatially integrates the portion of the incident light regularly reflected on the object, and therefore the object is desirably a glossy material easy to cause regular reflection.

Further, the arithmetic unit 18 makes determination based on the spectral characteristic corresponding to the interference caused by the thin film formed on the surface of the object. More desirably, therefore, the object of inspection is translucent.

### (Modification of radiator)

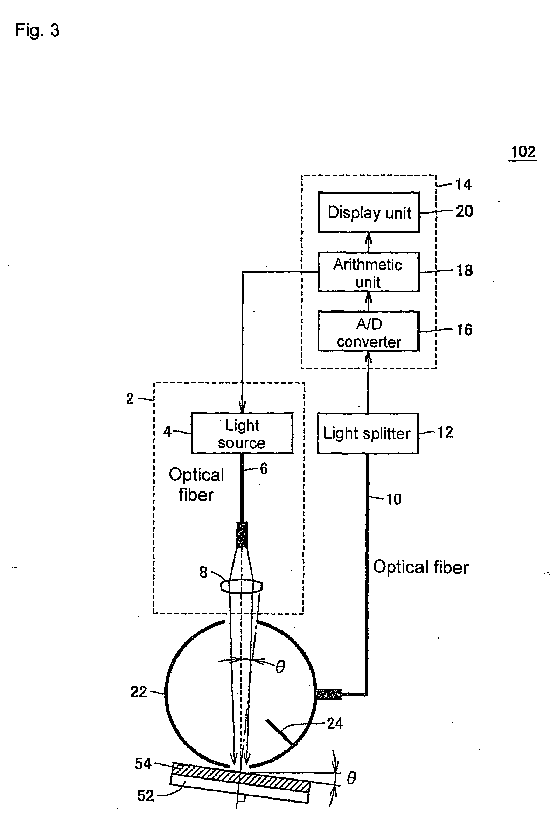

Fig. 3 is a diagram showing a general configuration of a thin film inspection apparatus 102 according to a modification of the first embodiment of the invention.

Referring to Fig. 3, the thin film inspection apparatus 102 has the same configuration as the thin film inspection apparatus 100 shown in Fig. 1, except for the direction in which the measurement light is radiated.

In the thin film inspection apparatus 102, the radiator 2 radiates the measurement light just downward along the center line of the integrating sphere 22. On the other hand, the object of inspection is arranged in such a manner that the radiated surface thereof forms a predetermined radiation angle θ with the radiation surface of the radiator 2.

In the thin film inspection apparatus 102, the radiation angle θ can be changed by changing the arrangement of the object, and therefore, as compared with the thin film inspection apparatus 100, the radiation angle θ can be set more freely. Thus, the determination error can be avoided by radiating the measurement light at an optimum radiation angle θ corresponding to the object.

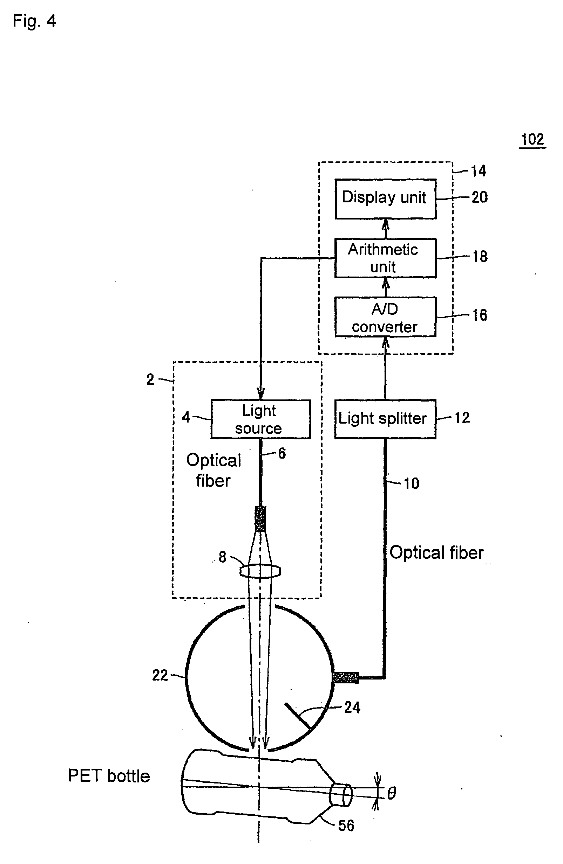

Fig. 4 shows an example of the appearance of the thin film inspection apparatus 102 used for inspecting a PET bottle 56.

Referring to Fig. 4, the center axis of the PET bottle 56 providing an object of inspection is tilted downward at the radiation angle θ from the horizontal surface. By displacing the radiation surface of the PET bottle 56 by the radiation angle θ in this way, the loss of the reflected light can be reduced. Incidentally, the radiation angle θ of about 8 degrees is desirable for inspecting the PET bottle 56.

### (Determination process)

Referring to Fig. 4, the process of determining the state of the barrier film formed on the surface of the PET bottle 56 is explained.

First, the arithmetic unit 18 radiates the measurement light from the radiator 2 with nothing set on the thin film inspection apparatus 102. The intensity spectrum output from the light splitter 12 is stored as a dark reference D(λ) in the arithmetic unit 18. The dark reference D(λ) is an initial value for removing the error due to the bias component of the light splitter 12 or the light intruding into the integrating sphere 22 from outside.

Next, the arithmetic unit 18 radiates the measurement light from the radiator 2 in the state where a reference PET bottle having the same shape as the object and formed with no barrier film thereon is set on the thin film inspection apparatus 102. The arithmetic unit 18 then stores the intensity spectrum output from the light splitter 12 as a reference spectrum R(λ).

Further, the arithmetic unit 18 radiates the measurement light from the radiator 2 with the object PET bottle 56 set on the thin film inspection apparatus 102. The arithmetic unit 18 then acquires the intensity spectrum output from the light splitter 12 as a measurement spectrum S(λ). Furthermore, the arithmetic unit 18 calculates the relative reflectivity A(λ) from the following equation using the measurement spectrum S (λ) , the dark reference D (λ) and the reference spectrum R (λ) in store.

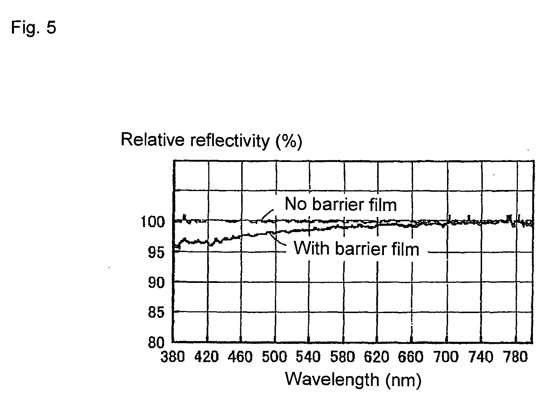

Relative reflectivity A(λ) = (S (λ) - D(λ))/(R(λ) - D(λ)) Fig. 5 shows an example of the relative reflectivity characteristic of the PET bottle.

Referring to Fig. 5, the relative reflectivity of the PET bottle not formed with the barrier film is constant at about 100 % over the whole wavelength range. The relative reflectivity of the PET bottle formed with the barrier film, on the other hand, is progressively decreased with the decrease in wavelength and finally reaches as low as 95 % for the shortest wavelength of 380 nm.

This is due to the interference by the barrier film, and the change of the relative reflectivity with respect to the wavelength is dependent on the thickness of the barrier film.

The arithmetic unit 18 determines the presence or absence of the barrier film and the thickness thereof, if any, based on whether the ratio of the relative reflectivity to the wavelength, i.e. dA (λ) /dλ is within a predetermined range or not.

The foregoing description deals with a case in which the light intensity spectrum is used as a spectral characteristic. In an alternative method based on the fitting of the interference waveform, however, the determination can be made based on the change of the ratio or the difference of light intensity for a specified wavelength.

As another alternative, the determination maybe made based on the light intensity ratio among a plurality of specified wavelengths. In other words, the determination can be made based on the change in spectral characteristic.

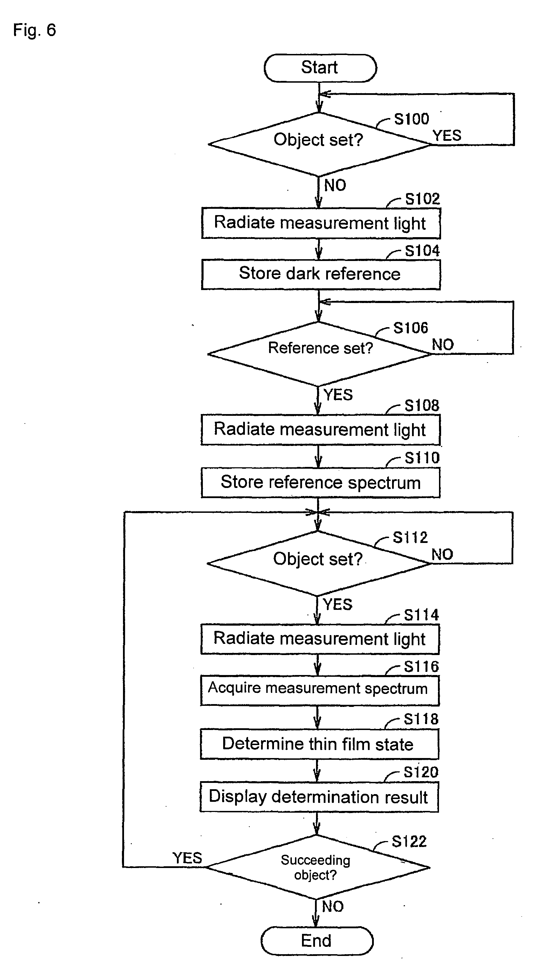

Fig. 6 is a flowchart showing the determination process.

Referring to Fig. 6, the arithmetic unit 18 determines whether the object of inspection is set or not (step S100).

In the case where the object is set (YES at step S100), the arithmetic unit 18 waits until the object is removed (step S100).

In the case where the object is not set (NO at step S100), on the other hand, the arithmetic unit 18 radiates the measurement light from the radiator 2 (step S102). The arithmetic unit 18 then stores, as a dark reference, the intensity spectrum acquired through the light splitter 12 and the A/D converter 16 (step S104).

Next, the arithmetic unit 18 determines whether the reference is set or not (step S106).

In the case where the reference is not set (NO at step S106), the arithmetic unit 18 waits until the reference is set (step S106).

In the case where the reference is set (YES at step S106), on the other hand, the arithmetic unit 18 radiates the measurement light from the radiator 2 (step S108). The arithmetic unit 18 then stores, as a reference spectrum, the intensity spectrum acquired through the light splitter 12 and the A/D converter 16 (step S110).

Further, the arithmetic unit 18 determines whether the object is set or not (step S112).

In the case where the object is not set (NO at step S112), the arithmetic unit 18 waits until the object is set (step S112) .

In the case where the object is set (YES at step S112), on the other hand, the arithmetic unit 18 radiates the measurement light from the radiator 2 (step S114). The arithmetic unit 18 then stores, as a measurement spectrum, the intensity spectrum acquired through the light splitter 12 and the A/D converter 16 (step S116).

The arithmetic unit 18 calculates the relative reflectivity and the differentiation value thereof using the dark reference, the reference spectrum and the measurement spectrum, and determines the state of the thin film (step S118) . The arithmetic unit 18 displays the determination result on the display unit 20 (step S120).

Further, the arithmetic unit 18 determines the presence or absence of a succeeding object of inspection (step S122).

In the presence of a succeeding object (YES at step S122), the arithmetic unit 18 waits until the next object is set (step S112).

In the absence of a succeeding object (NO at step S122), on the other hand, the arithmetic unit 18 terminates the process.

According to the first embodiment of the invention, the portion of the measurement light radiated from the radiator and reflected in a plurality of directions in accordance with the object of inspection is spatially integrated by the integrating sphere. Regardless of the shape of the object, therefore, the light splitter can acquire the intensity spectrum of the light reflected on any object. As a result, the state of the thin film formed on the surface of the object of any shape can be determined in non-destructive way.

Also, according to the first embodiment of the invention, the measurement light is simply radiated on the object of inspection, and therefore the determination takes only a short time. As a result, the total inspection of products such as PET bottles is made possible on the production line. Thus, the reliability of the product such as the PET bottle can be improved.

### [Second embodiment]

In the first embodiment, a configuration is explained in which the intensity spectrum providing a reference is stored as a reference spectrum in advance, and the determination is made by making comparison with the reference spectrum.

According to a second embodiment, in contrast, the same measurement light is radiated on both the reference and the object, and the determination is made by comparing the respective intensity spectrum.

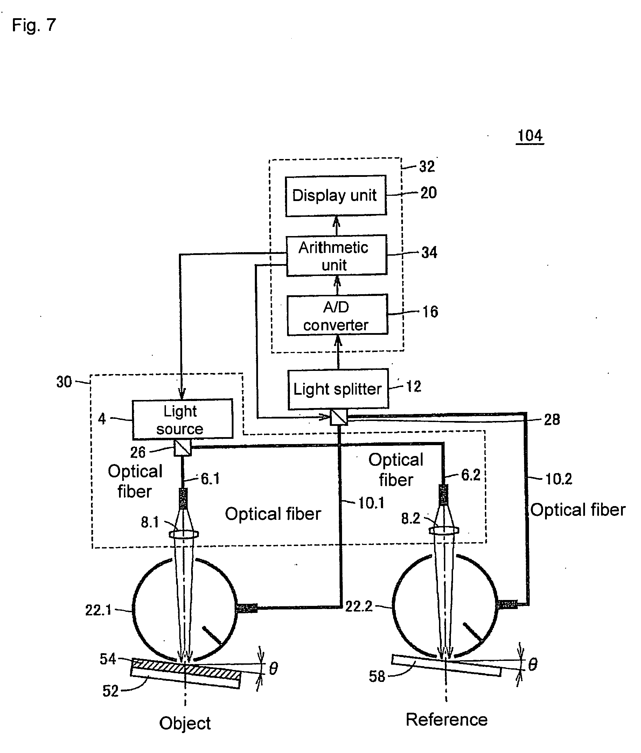

Fig. 7 is a diagram showing a general configuration of a thin film inspection apparatus 104 according to the second embodiment of the invention.

Referring to Fig. 7, the thin film inspection apparatus 104 comprises a radiator 30, integrating spheres 22.1, 22.2, optical fibers 10.1, 10.2, an optical switch 28, a light splitter 12 and an arithmetic controller 32.

The radiator 30 includes a light source 4, a light distributor 26, optical fibers 6.1, 6.2 and focusing lenses 8.1, 8.2.

The light source 4 is explained above and not explained again.

The light distributor 26 distributes the measurement light generated by the light source 4 into two parts, which are applied to the optical fibers 6.1, 6.2, respectively.

In the optical fibers 6.1, 6.2, the measurement light received from the light distributor 26 is led to the focusing lenses 8.1, 8.2, respectively.

The focusing lens 8.1 focuses the measurement light received through the optical fiber 6.1, and radiates the focused light on the object of inspection. The focusing lens 8.2, on the other hand, focuses the measurement light received through the optical fiber 6.2 and radiates the focused light on a reference.

The integrating sphere 22.1 spatially integrates the portion of the radiatedmeasurement light reflected on the object of inspection. The integrating sphere 22.2, on the other hand, spatially integrates the portion of the radiated measurement light reflected on the reference. The integrating spheres 22.1, 22.2 have a similar configuration to the integrating sphere 22 described above, and therefore are not described again.

The optical fibers 10.1, 10.2 extract the reflected light integrated by the integrating spheres 22.1, 22.2, respectively, and lead them to the optical switch 28.

The optical switch 28, in response to a command from the arithmetic unit 34, applies the reflected light received from one of the optical fibers 10.1, 10.2 to the light splitter 12.

The light splitter 12 is described above and not explained again.

The arithmetic controller 32 includes the A/D converter 16, the arithmetic unit 34 and the display unit 20.

The A/D converter 16 and the display unit 20 are described above and not explained again.

The arithmetic unit 34 issues a command to the optical switch 28 and determines whether the intensity spectrum of the object or the intensity spectrumof the reference is to be acquired. The arithmetic unit 34 acquires the intensity spectrum of the reference at predetermined time intervals, and updates the reference spectrum in store. Further, the arithmetic unit 34 determines the state of the thin film formed on the surface of the object of inspection, based on the difference between the reference spectrum and the measurement spectrum of the object.

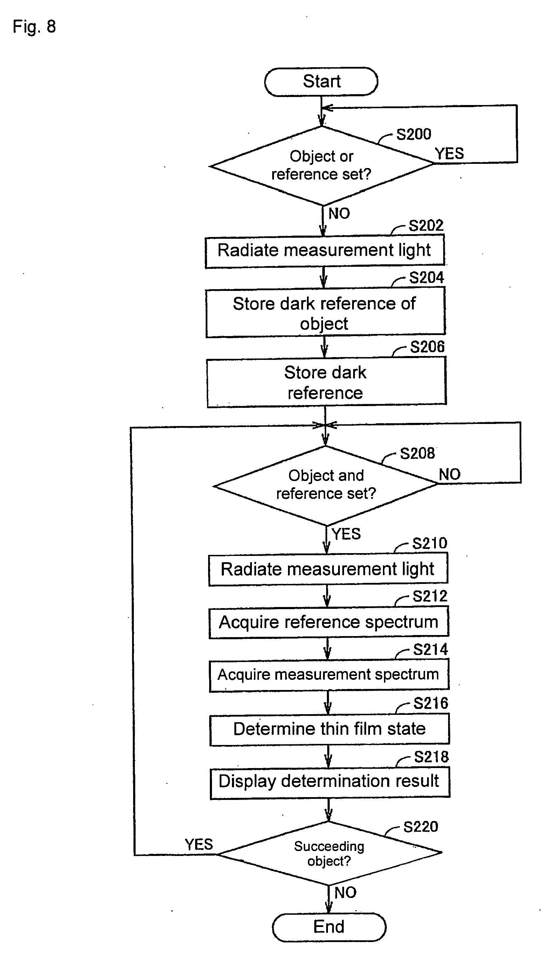

Fig. 8 is a flowchart showing the process executed in the thin film inspection apparatus 104.

Referring to Fig. 8, the arithmetic unit 34 determines whether the object of inspection or the reference is set or not (step S200).

In the case where the object or the reference is set (YES at step S200), the arithmetic unit 34 waits until the object of inspection or the reference, as the case may be, is removed (step S200).

In the case where neither the object of inspection nor the reference is set (NO at step S200), on the other hand, the arithmetic unit 34 radiates the measurement light from the radiator 30 (step S202). Then, the arithmetic unit 34 issues a command to the optical switch 28 and stores, as a dark reference of the object, the intensity spectrum acquired from the integrating sphere 22.1 through the optical fiber 10.1, the optical switch 28, the light splitter 12 and the A/D converter 16 (step S204) . Further, the arithmetic unit 34 issues a command to the optical switch 28, and stores, as a dark reference, the intensity spectrum acquired from the integrating sphere 22.2 through the optical fiber 10.1, the optical switch 28, the light splitter 12 and the A/D converter 16 (step S206).

Next, the arithmetic unit 18 determines whether the object of inspection and the reference are set or not (step S208).

In the case where the obj ect of inspection or the reference is not set (NO at step S208), the arithmetic unit 34 waits until both the object of inspection and the reference are set (step S208).

In the case where both the object of inspection and the reference are set (YES at step S208), on the other hand, the arithmetic unit 34 radiates the measurement light from the radiator 30 (step S210). The arithmetic unit 18 then issues a command to the optical switch 28 and acquires, as a reference spectrum, the intensity spectrum acquired from the integrating sphere 22.2 through the optical fiber 10.2, the optical switch 28, the light splitter 12 and the A/D converter 16 (step S212) . Further, the arithmetic unit 34 issues a command to the optical switch 28 and acquires, as a measurement spectrum, the intensity spectrum acquired from the integrating sphere 22.1 through the optical fiber 10.1, the optical switch 28, the light splitter 12 and the A/D converter 16 (step S214).

The arithmetic unit 34 calculates the relative reflectivity and the differentiation value thereof using the dark reference, the reference spectrum and the measurement spectrum, and determines the state of the thin film (step S216). Then, the arithmetic unit 34 displays the determination result on the display unit 20 (step S218).

Further, the arithmetic unit 34 determines the presence or absence of a succeeding object of inspection (step S220).

In the presence of a succeeding object of inspection (YES at step S220), the arithmetic unit 34 waits until the next object is set (step S208).

In the absence of a succeeding object of inspection (NO at step S220), on the other hand, the arithmetic unit 34 terminates the process.

In accordance with the period during which the "fluctuation" of the light source or the light splitter may occur, the reference spectrum is updated for each predetermined period of time such as once every several hours.

Although the foregoing description illustrates a configuration in which the measurement light generated by the radiator is distributed into two parts by the light distributor, a light switch may be used in place of the light distributor. As compared with the light distributor, the light switch involves less intensity reduction of the measurement light, and therefore the cost of the light source 4 can be suppressed.

According to the second embodiment of the invention, in addition to the effects of the first embodiment, the spectrum of the reference spectrum can be acquired at the desired timing. Therefore, the time and labor for updating the reference spectrum are remarkably reduced. As a result, the determination error due to the "fluctuation" of the light source and the light splitter can be suppressed and the determination accuracy can be improved by frequently updating the reference spectrum.

Also, according to the second embodiment of the invention, the reference is not required to be reset in the thin film inspection apparatus to update the reference spectrum. Therefore, in the PET bottle production line, for example, the determination accuracy can be improved while shortening or maintaining the tact time.

### [Other embodiments]

The configuration is described above in which the reflected light integrated by the integrating sphere is led to the light splitter by the optical fiber. Nevertheless, the light splitter and the integrating sphere may be directly connected to each other.

Also, in place of the configuration in which the radiator radiates the measurement light in spots, the object of inspection may be moved and/or rotated in synchronism with the radiation of the measurement light. With such a configuration, the state of the thin film can be inspected over the entire length of the object of inspection.

The embodiments disclosed above should be considered illustrative and not limitative in all respects. The scope of the present invention is defined not by the foregoing description but by the claims attached hereto, and intended to include all the modifications and alterations without departing from the scope of the claims.

## Claims

1. A thin film inspection apparatus comprising:
a radiator for radiating a measurement light on an object to be inspected;
an integrator with a light-reflecting dispersive material formed on the inner surface of a hollow space into which a light out of the measurement light reflected from the object is introduced through an opening to be spatially integrated;
a light splitter for acquiring a spectral characteristic of the reflected light integrated by the integrator; and
an arithmetic processor for determining a state of the thin film formed on the surface of the obj ect based on the spectral characteristic acquired by the light splitter.

2. The thin film inspection apparatus according to claim 1,
wherein the arithmetic processor stores a spectral characteristic of a reference having the same shape as the obj ect and no thin film formed thereon, and determines the state of the thin film formed on the surface of the object by comparison with the spectral characteristic thus stored.

3. The thin film inspection apparatus according to claim 1,
wherein the integrator includes an opening for passing the measurement light radiated from the radiator, and,
wherein the radiator radiates the measurement light from the direction at a predetermined angle to the direction substantially perpendicular to the radiated surface of the object.

4. The thin film inspection apparatus according to claim 1,
wherein the integrator includes a device for preventing the light splitter from directly acquiring the reflected light before integration.

5. The thin film inspection apparatus according to claim 1,
wherein the object to be inspected is a glossy container formed with a thin film on the surface thereof.

6. A thin film inspection apparatus comprising:
a radiator for radiating a measurement light on an object of inspection and a reference having the same shape as the object but not formed with a thin film on the surface thereof;
a first integrator for spatially integrating a light out of the measurement light reflected from the object;
a second integrator for spatially integrating a light out of the measurement light reflected from the reference;
a light splitter for acquiring spectral characteristics of the reflected lights integrated by the first and second integrators; and
an arithmetic processor for determining a state of the thin film formed on the surface of the object by comparing the spectral characteristic of the light reflected from the object and the spectral characteristic of the light reflected from the reference, said spectral characteristics being acquired by the light splitter.

7. The thin film inspection apparatus according to claim 6,
wherein the object of inspection is a glossy container formed with a thin film on the surface thereof.

8. A thin film inspection method comprising:
a radiation step for radiating a measurement light on an obj ect of inspection having a translucent, glossy surface formed with a thin film;
an integration step for spatially integrating the portion of the measurement light reflected due to the interference of the object thin film by covering a hollow space with a dispersion member for dispersively reflecting the measurement light;
a light splitting step for acquiring a spectral characteristic of the reflected light integrated at the integration step; and
an arithmetic processing step for determining a state of the thin film formed on the object surface based on the spectral characteristic acquired at the light splitting step.

9. The thin film inspection method according to claim 8,
wherein the object of inspection is a glossy container formed with a thin film on the surface thereof, and the measurement light is radiated on the uneven surface of the object.
